Europäisches Patentamt

European Patent Office

Office européen des brevets

(19)

(11) Veröffentlichungsnummer: **0 083 795**

**B1**

(12) # EUROPÄISCHE PATENTSCHRIFT

(45) Veröffentlichungstag der Patentschrift:
03.09.86

(21) Anmeldenummer: **82112041.7**

(22) Anmeldetag: **27.12.82**

(51) Int. Cl.⁴: **G 03 B 21/58**

(54) **Transportable Projektionsleinwand.**

(30) Priorität: **28.12.81 DE 3151631**
**25.06.82 DE 3231599**

(43) Veröffentlichungstag der Anmeldung:
**20.07.83 Patentblatt 83/29**

(45) Bekanntmachung des Hinweises auf die Patenterteilung:
**03.09.86 Patentblatt 86/36**

(84) Benannte Vertragsstaaten:
**BE DE FR GB IT NL SE**

(56) Entgegenhaltungen:
**DE-U-6 603 682**
**US-A-3 841 594**

(73) Patentinhaber: **Meinunger, Helmut,**
**Ehrenfelsstrasse 3, D-8000 München 70 (DE)**

(72) Erfinder: **Meinunger, Helmut, Ehrenfelsstrasse 3,**
**D-8000 München 70 (DE)**

(74) Vertreter: **Schaefer, Gerhard, Dr., Seitnerstrasse**
**13, D-8023 Pullach (DE)**

## Beschreibung

Die Erfindung betrifft eine transportable Projektionsleinwand, die in einem Gehäuse ausrollbar gelagert ist, mit einem Standrohr zur Stützung der ausgezogenen Leinwand, mit ausklappbaren Stativbeinen, sowie mit einem Tragegriff.

Derartige transportable projektionsleinwände sind bekannt, vgl. US-A-3 841 594. Sie weisen in der Regel am unteren Ende des Standrohrs drei ausklappbare Stativbeine auf, die beim Transport in Richtung der Achse des Standrohrs zusammengeklappt werden. Das Gehäuse ist um seine Mittelachse schwenkbar am Standrohr angeordnet und Gehäuse oder Standrohr sind mit einem Tragegriff versehen.

Derartige Projektionsleinwände sind umständlich zu handhaben und stehen in der Regel nicht stabil. Außerdem ist ihre Herstellung aufwendig und damit teuer.

Der Erfindung liegt die Aufgabe zugrunde, diese Nachteile zu vermeiden und eine einfach aufgebaute und leicht zu handhabende Projektionsleinwand zu schaffen, die bequem aufzubewahren und zu transportieren ist.

Erfindungsgemäß wird dies dadurch erreicht, daß am Gehäuse ein Standkörper starr befestigt ist, an dem die Stativbeine schwenkbar angelenkt sind. Der Standkörper kann auch einen schwenkbaren Fußteil aufweisen, an dem die Stativbeine schwenkbar angelenkt sind. Dies ermöglicht, das zur Aufbewahrung der zusammengerollten Projektionsleinwand dienende Gehäuse, das auch als Tube bezeichnet wird, in seinem Aufbau zu belassen, durch einen an ihm befestigten Standkörper jedoch die Voraussetzung für die kompakte und stabile Lagerung der abklappbaren Stativbeine zu schaffen, und so bei ausgeklappten Stativbeinen und ausgezogener Leinwand einen stabilen Stand der gesamten Anordnung zu gewährleisten.

Gemäß einer vorteilhaften Ausbildung der Erfindung weisen die Stativbeine am oberen Ende kugelförmige Endteile auf, die mit als Lagerschalen dienenden Ausnehmungen im Standkörper in Eingriff stehen. Diese Ausnehmungen können halbkugel- oder kegelstumpfförmig ausgebildet sein, und in den vorzugsweise aus Kunststoff im Spritzgußverfahren hergestellten Standkörper eingeformt sein. Dies vereinfacht die Herstellung. Die Lagerschalen für ein Stativbein sind dabei unter der Mittelachse des Gehäuses und nach einer Richtung außermittig versetzt angeordnet, und die Lagerschalen für zwei weitere Stativbeine sind in derselben Ebene mit Abstand von den ersten Lagerschalen und in der anderen Richtung versetzt angeordnet.

Gemäß einer vorteilhaften Weiterbildung der Erfindung ist im Standkörper eine verschiebbare, horizontal verlaufende Halteplatte vorgesehen, die an senkrecht nach unten verlaufenden Haltern Nasen aufweist, welche mit den Stativbeinen in Eingriff bringbar sind. Die Halter können hierbei elastisch verformbar ausgebildet sein.

Diese Ausbildung der Stativbeine und der Halter ermöglicht es, die Stativbeine in einer Lage parallel und unterhalb des Gehäuses zu arretieren und sie durch Verschiebung der Betätigungsplatte freizugeben. Die Betätigungsplatte kann dabei gegen die Kraft einer Feder verschiebbar sein. Sie kann außerdem einen Lappen aufweisen, der einen Betätigungsknopf trägt, welcher durch den Standkörper hindurchgreift und so von außen zugänglich ist. Das Einklappen und Arretieren der Stativbeine geschieht dadurch, daß diese an die Halteplatte herangeklappt werden.

Vorteilhafterweise sind die Halter von den Nasen an am unteren Ende keilförmig ausgebildet. Hierdurch wird erreicht, daß beim Anklappen der Stativbeine an die Halteplatte diese seitlich verschoben wird, so daß die Stativbeine hinter die Nasen zu liegen kommen und dort arretiert sind.

Für die ausgeklappten Stativbeine sind im Standkörper Feststeller vorgesehen. Diese können aus elastischem Material bestehen und Ausnehmungen aufweisen, die dem Außendurchmesser der Stativbeine entsprechen. Wenn die Stativbeine kreisrunden Querschnitt haben, können die Feststeller ebenfalls kreisrund ausgebildet sein und einen in Längsrichtung sich erstreckenden Schlitz aufweisen, dessen Öffnungswinkel kleiner als 180° ist.

Zur Montage des Standrohrs kann der Standkörper mindestens auf einer Seite eine Ausnehmung für dessen abnehmbare Befestigung aufweisen. Diese Ausnehmung kann schlüssellochförmig ausgebildet sein und am Standrohr kann ein rechtwinklig zu diesem verlaufender und gegen dieses verschiebbarer Bolzen mit Betätigungsknopf vorgesehen sein, der einen nach einer Seite verlaufenden Stift aufweist. Um den Bolzen kann eine auf einer Scheibe sich abstützende Schraubenfeder angeordnet sein. Hierdurch wird erreicht, daß durch das Einschieben des Bolzens und Verdrehen des Betätigungsknopfes um 90° bzw. 180° eine Befestigung des Standrohrs durchgeführt wird.

Um sicherzustellen, daß das Standrohr entweder genau parallel zum Leinwandgehäuse oder senkrecht zu diesem ausgerichtet ist, ist vorgesehen, daß von der Ausnehmung ausgehend je eine parallel zum Leinwandgehäuse oder rechtwinklig dazu verlaufende Kerbe vorgesehen ist.

Zur Erleichterung des Transports ist der Standkörper mit mindestens einem Handgriff versehen. Dieser kann im Standkörper versenkbar sein.

Gemäß einer besonders vorteilhaften Ausbildung der Erfindung weist der Standkörper einen schwenkbaren Fußteil auf, an dem die Stativbeine schwenkbar angelenkt sind. Dies ermöglicht einen besonders einfachen und kompakten Aufbau. Die Stativbeine sind dabei rohrförmig ausgebildet und am oberen Ende mittels Lagerbolzen im Fußteil des Standkörpers befestigt. Sie sind dabei in einer quer zur Mittelachse des Gehäuses verlaufenden Querachse angeordnet. Der Lagerbolzen des mittleren Stativbeins ist in Richtung der Querachse und die Lagerbolzen der äußeren Stativbeine sind in einem Winkel von 60° hierzu angeordnet. Der Fußteil des Standkörpers weist eine Bodenplatte mit langgestreckten Öffnungen auf, deren Längsachse rechtwinklig zu den Lagerbolzen verläuft und durch die sich die Stativbeine hindurch erstrecken. Die langgestreckten Öffnungen sind an ihren beiden Enden entsprechend dem Querschnitt der Stativbeine kreisförmig ausgebildet und der dazwischenliegende Teil weist eine Verengung auf. Mindestens auf einer Seite der Ausnehmungen kann die Bodenplatte einen Schlitz aufweisen. Hierdurch kann sich der verengende Teil unter Druck elastisch zur Seite bewegen und die Stativbeine sind jeweils in ihren Endlagen stabil verrastet.

Weitere Einzelheiten und Vorteile der Erfindung können den in der Zeichnung schematisch dargestellten Ausführungsbeispielen entnommen werden. Es zeigen:

Fig. 1 eine Ansicht einer Ausführungsform der erfindungsgemäßen transportablen Projektionsleinwand in zusammengelegtem Zustand;

Fig. 2 eine der Fig. 1 entsprechende Ansicht von der Stirnseite her gesehen;

Fig. 3 eine Draufsicht auf die in Fig. 1 dargestellte Projektionsleinwand;

Fig. 4 eine der Fig. 1 entsprechende Ansicht mit ausgeklappten Stativbeinen und Standrohr;

Fig. 5 eine der Fig. 4 entsprechende Ansicht von der Stirnseite;

Fig. 6 eine vergrößerte Ansicht der in Fig. 1 dargestellten Ausführungsform im Bereich des Standkörpers;

Fig. 7 eine der Fig. 6 entsprechende Ansicht von der Stirnseite her gesehen;

Fig. 8 eine Draufsicht auf die in Fig. 6 dargestellte Projektionsleinwand;

Fig. 9 eine perspektivische Ansicht der in den Figuren 6 bis 8 dargestellten Stativbeine;

Fig. 10 eine der Fig. 8 entsprechende perspektivische Ansicht der ausgeklappten Stativbeine;

Fig. 11 eine perspektivische Ansicht der Halterung der Stativbeine;

Fig. 12 eine perspektivische Ansicht der Stativbeine in festgestelltem Zustand;

Fig. 13 einen Schnitt durch den Standkörper im Bereich der Halterung des Standrohrs;

Fig. 14 einen Teilschnitt durch das untere Ende des Standrohrs im Bereich der Halterung;

Fig. 15 eine Ansicht einer weiteren Ausführungsform der erfindungsgemäßen transportablen Projektionsleinwand in zusammengelegtem Zustand;

Fig. 16 eine der Fig. 15 entsprechende Ansicht von der Stirnseite her gesehen;

Fig. 17 eine Draufsicht auf die in Fig. 15 dargestellte Projektionsleinwand;

Fig. 18 eine der Fig. 15 entsprechende Ansicht mit ausgeklapptem Fußteil des Standkörpers;

Fig. 19 eine der Fig. 18 entsprechende Ansicht mit abgespreizten Stativbeinen;

Fig. 20 eine der Fig. 18 entsprechende vergrößerte Ansicht des Standkörpers mit Fußteil;

Fig. 21 der in Fig. 20 dargestellte Standkörper von unten gesehen;

Fig. 22 eine der Fig. 21 entsprechende Ansicht mit ausgeklappten Stativbeinen.

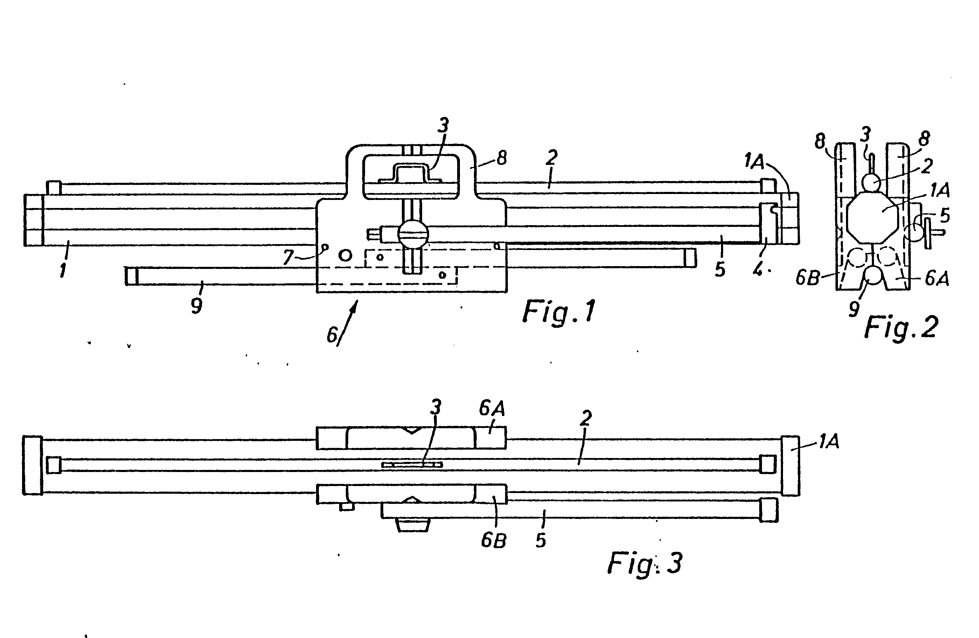

Bei der in den Figuren 1 bis 5 dargestellten ersten Ausführungsform einer erfindungsgemäßen transportablen Projektionsleinwand ist die Leinwand selbst in bekannter Weise ausgebildet und in einem Gehäuse 1, das auch als Tube bezeichnet wird,aufgerollt. Das Gehäuse 1 kann im Querschnitt achteckige Form haben. Es ist beidseitig durch Endkappen 1A verschlossen, die einen (nicht dargestellten), vorzugsweise durch Federkraft angetriebenen, Aufrollmechanismus aufweisen.

Die Leinwand ist an einem durchgehenden Steg 2 befestigt, der mit Hilfe des Bügels 3 nach oben gezogen werden kann, wodurch die Leinwand ausgerollt wird. Die ausgerollte Leinwand wird mit dem Bügel 3 in die Kerbe 4A eines Kragarmes 4 eingehängt, der am Ende eines teleskopartige ausziehbaren Standrohres 5, 5A angeordnet ist.

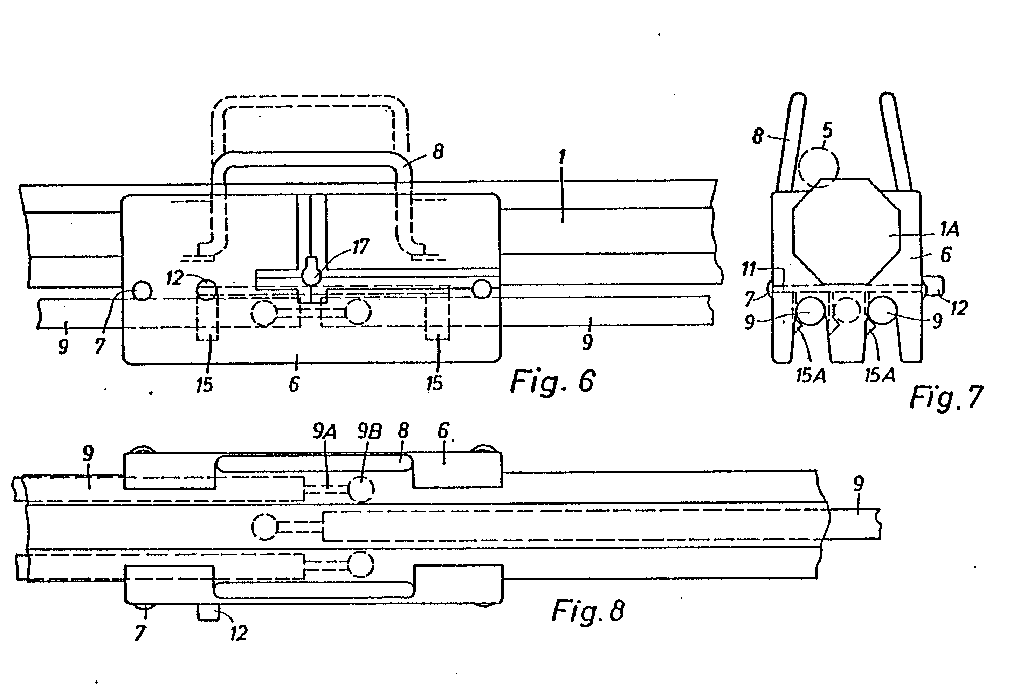

Vorteilhafterweise ist das Gehäuse 1 an einem Standkörper 6 befestigt, der aus zwei Hälften 6A und 6B aufgebaut ist. Diese sind mit Hilfe von Schrauben oder Nieten 7 zusammengehalten. Sie können auch verklebt oder verschweißt sein. Jede Hälfte des Standkörpers 6 ist mit einem Handgriff 8 versehen, der entweder (wie in den Figuren 1 bis 5 dargestellt) einstückig mit der zugehörigen Hälfte des Grundkörpers 6 ausgebildet ist oder der (wie in den Figuren 6 bis 8 dargestellt) in diesen versenkbar ist.

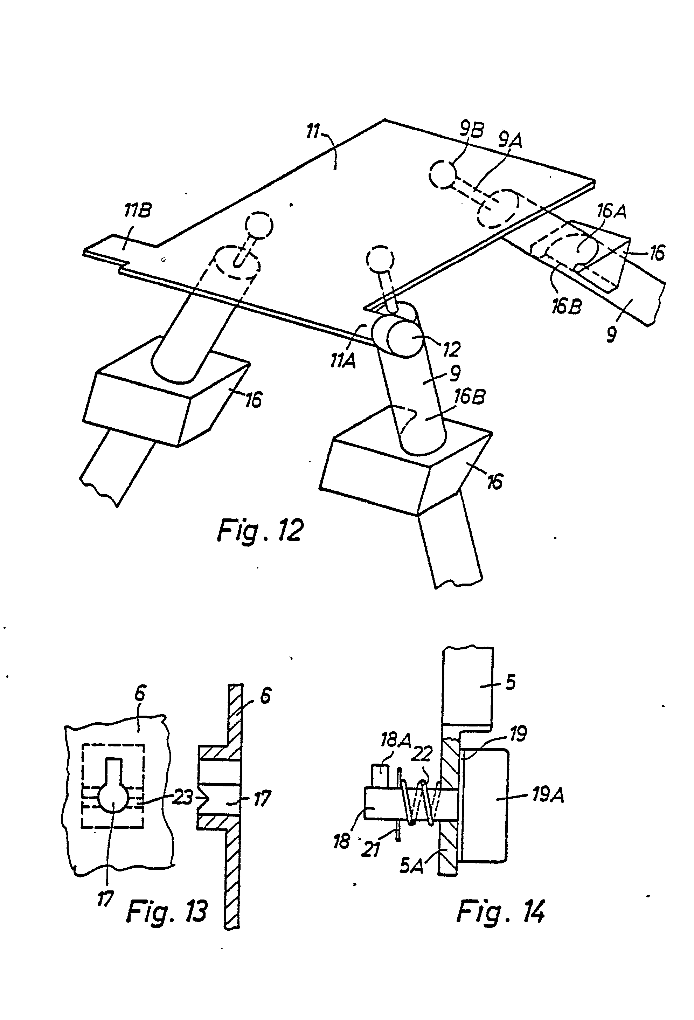

Im unteren Teil des Standkörpers 6 sind beider erfindungsgemäßen Projectionsleinwand die Stativbeine 9 schwenkbar gelagert. Einzelheiten dieser Lagerung sind insbesondere den Figuren 6 bis 12 zu entnehmen. Jedes der Stativbeine 9 ist an seinem oberen Ende über einen Hals 9A mit einer Kugel 9B versehen, die in zwei kugelkalottenförmigen oder kegelstumpfförmigen Lagerschalen 10 im Standkörper 6 gelagert ist, wie dies der Fig. 11 zu entnehmen ist. Die Lagerschalen 10 können in Stege 6A eingeformt sein, die Teil des vorzugsweise aus Kunststoff im Spritzgußverfahren hergestellten Standkörpers 9 sind. Hierbei befindet sich ein Satz dieser Lagerschalen 10 senkrecht unter der Mittelachse des Gehäuses 1 auf einer horizontal unterhalb der Unterkante des Gehäuses 1 verlaufenden Ebene. Je zwei weitere Lagerschalen 10 sind links und rechts im selben Abstand von der Mittelachse in derselben horizontalen Ebene angeordnet. In den Lagerschalen 10 sind die Stativbeine 9 mit ihren Kugelköpfen 9B derartig gelagert, daß das in der Mitte liegende Bein parallel zur Längsachse des Gehäuses 1 in eine, die beiden anderen Stativbeine 9 in die andere Richtung weisen.

Unterhalb des Gehäuses 1 und oberhalb der Lagerschalen 10 ist eine Betätigungsplatte 11 vorgesehen, die horizontal verschiebbar im Standkörper 6 angeordnet ist. Diese Betätigungsplatte 11 weist einen vorspringenden Lappen 11A auf, der mit einem Betätigungsknopf 12 versehen ist. An der diesem Lappen entgegengesetzten Seite ist ein weiterer Lappen 11B vorgesehen, um den eine Schraubenfeder 13 angeordnet ist, die sich im Standkörper 6 abstützt.

An der Betätigungsplatte 11 sind drei sich nach unten erstreckende Halter 15 vorgesehen, die an ihrem unteren Teil nach einer Seite vorspringende Nasen 15A aufweisen und am Ende 15B keilförmig auslaufen. Die Vorsprünge 15 sind so angeordnet, daß sie in der Ruhelage der Betätigungsplatte 11 von einer Seite her an den eingeklappten Stativbeinen 9 anliegen, wobei ihre Nasen 15A unter die Stativbeine 9 greifen. Hierdurch sind die Stativbeine parallel zur Betätigungsplatte 11 in einer horizontalen Ebene unterhalb des Gehäuses 1 festgehalten.

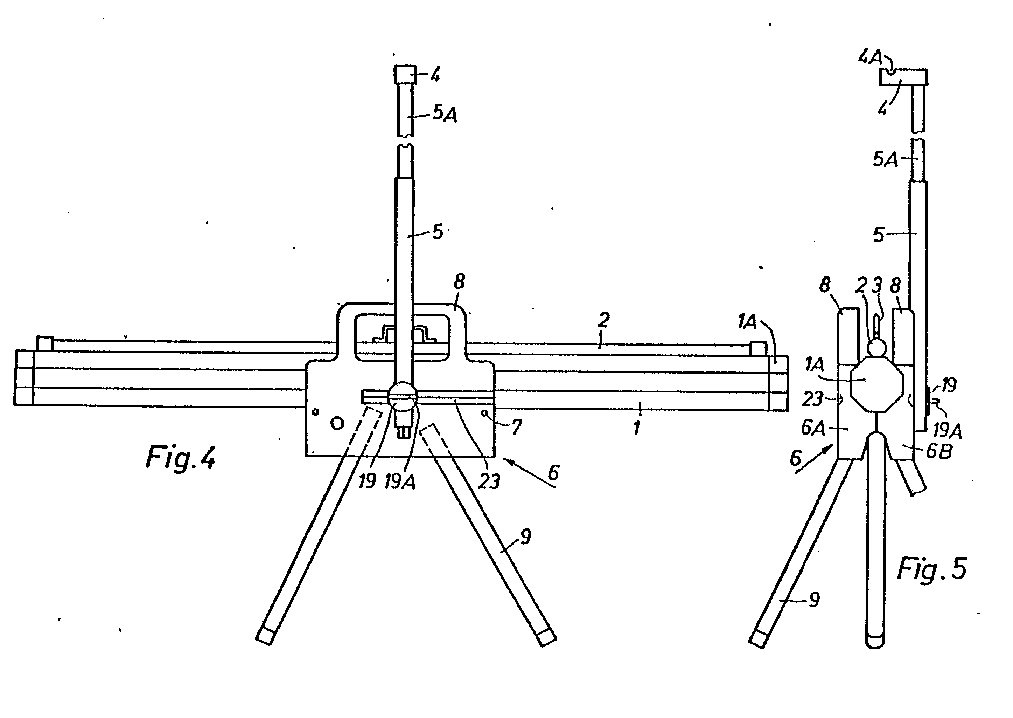

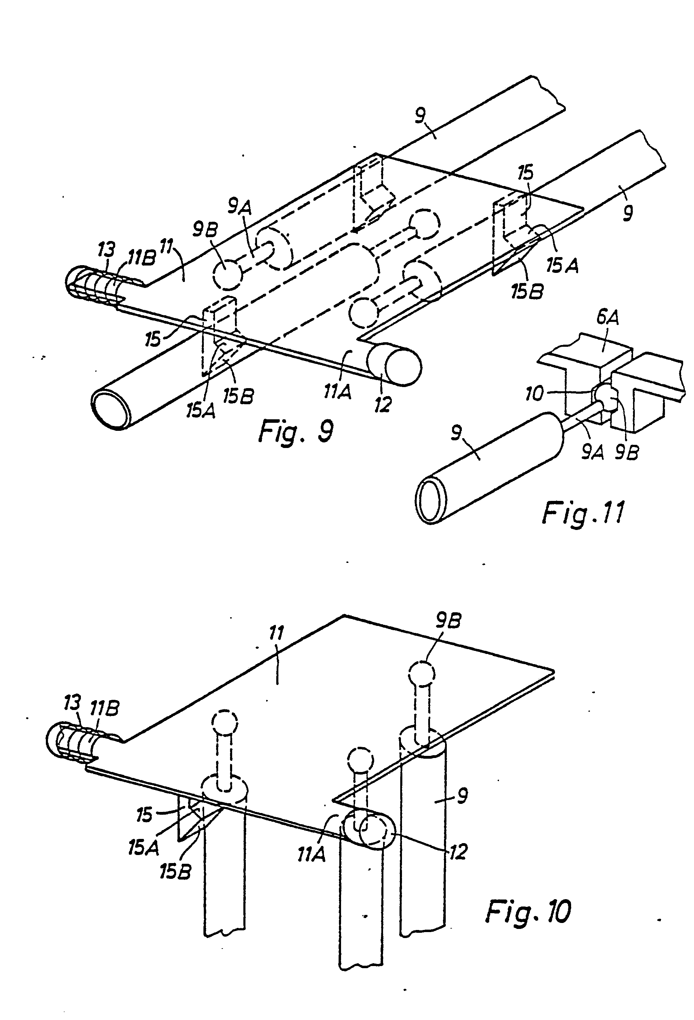

Durch Drücken des Betätigungsknopfes 12 gegen die Kraft der Feder 13 werden die Halter 15 mit ihren Nasen 15A außer Eingriff mit den Stativbeinen 9 gebracht. Hierdurch schwenken diese in die in Fig. 10 dargestellte Stellung senkrecht nach unten. Sie können dann einzeln von Hand oder durch nicht dargestellte Federn nach außen in Feststeller 16 gedrückt werden, die ebenfalls am Standkörper 6 befestigt sind und die je eine dem äußeren Durchmesser der Stativbeine 9 entsprechende kreisrunde Ausnehmung 16A sowie einen Längsschlitz 16B aufweisen. Die Stativbeine 9 sind hierdurch in einer nach unten und außen abgespreizten Stellung, wie sie in den Figuren 4, 5 und 12 dargestellt ist, arretiert. Das Einklappen der Stativbeine 9 erfolgt in der Weise, daß sie durch Druck nach innen aus den Feststellern 16 gelöst und dann in die parallel zur Betätigungsplatte 11 verlaufende Ebene gedrückt werden. Hierbei schieben sie mit Hilfe der keilförmigen Flächen 15B der Halter 15 jeweils die Betätigungsplatte 11 gegen die Kraft der Feder 13 beiseite und gelangen hinter der Nase 15A in ihre Ruhestellung. Infolge der Elastizität der Halter 15 bleibt die Verrastung der bereits eingerasteten Stativbeine 9 bestehen, auch wenn die übrigen Stativbeine eingeschwenkt werden.

Gemäß einer Weiterbildung des Anmeldungsgegenstandes ist das Standrohr 5, das der Halterung der ausgezogenen Leinwand dient, sowohl in eine Lage parallel zum Gehäuse 1, wie senkrecht dazu schwenkbar. Das Standrohr 5 ist außerdem von einer Seite des Standkörpers 6 auf die andere Seite umsteckbar. Dies ist dann erforderlich, wenn eine auf beiden Seiten mit unterschiedlicher Beschichtung versehene Leinwand verwendet wird.

Zu diesem Zweck ist im Standkörper 6 eine Ausnehmung 17 vorgesehen, die schlüssellochförmig ausgebildet ist. In diese ist ein in eine Bohrung des flachen unteren Teils 5A des Standrohres 5 eingesetzter Bolzen 18 mit einem senkrecht zu seiner Achse verlaufenden Stift 18A versehen, der in diese Ausnehmung 17 einschiebbar ist. Der Bolzen 18 ist am entgegengesetzten Ende mit einem Handgriff 19 versehen, der in der dargestellten Ausführungsform als Scheibe mit aufgesetztem Steg 19A ausgebildet ist. Um den Bolzen 18 ist eine Schraubendruckfeder 22 angeordnet, die sich einerseits am Ansatz 5A des Standrohrs 5 und andererseits auf einer Scheibe 21 abstützt. Durch Einführen des Bolzens 18 in die Ausnekmung 17 und Drehen des Knopfes 19 um 90° oder 180° ist das Standrohr 5 am Standkörper 6 befestigt. Um eine einwandfreie, senkrechte bzw. horizontale, parallel zum Gehäuse 1 verlaufende Lage des Standrohrs 5 sicherzustellen, ist der Standkörper 6 mit je einer parallel und senkrecht zum Gehäuse 1 verlaufenden Keilnut 23 versehen, mit der das Standrohr 5 in Eingriff bringbar ist.

Um beim Versand die äußeren Abmessungen der erfindungsgemäßen transportablen Leinwand noch zu verringern, kann das Standrohr 5 noch in der in Fig. 7 gestrichelt dargestellten Weise auf den Standkörper aufgelegt und dort gegebenenfalls durch (nicht dargestellte) Klemmfedern gehalten werden.

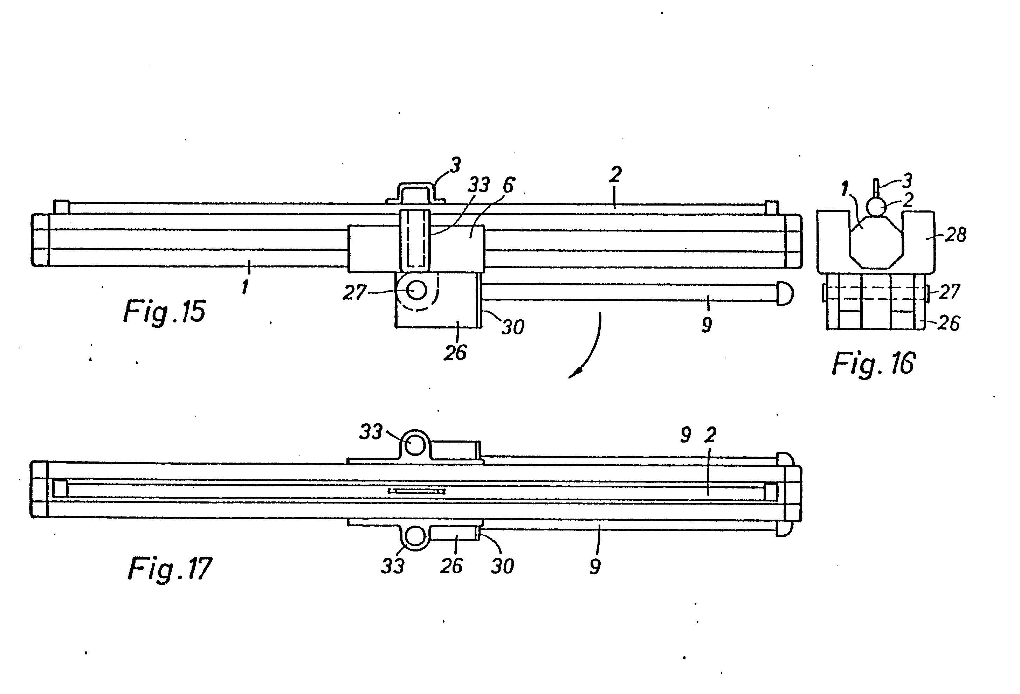

Bei dem in den Figuren 15 bis 22 dargestellten weiteren Ausführungsbeispiel einer erfindungsgemäßen transportablen Projektionsleinwand ist im Unterschied zu dem vorstehend beschriebenen Ausführungsbeispiel der Standkörper 6 mit einem Fußteil 26 versehen, das um eine quer zur Achse des Gehäuses 1 verlaufende Schwenkachse 27 um 90° schwenkbar ist. Bei dieser Ausführungsform sind rohrförmige Stativbeine 9 mit ihren Endteilen mittels Lagerbolzen 29 in entsprechenden Ausnehmungen im Fußteil 26 des Standkörpers 6 längs einer Querachse B, die rechtwinklig zur Mittelachse A des Gehäuses 1 verläuft, gelagert. Der Lagerbolzen 29 des mittleren Stativbeins 9 verläuft dabei in Richtung dieser Querachse B, so daß dieses Stativbein in Richtung der Mittelachse A des Gehäuses 1 verschwenkbar ist. Die Bolzen 29 der beiden äußeren Stativbeine 9 schließen einen Winkel von 60° mit der Mittelachse A des Gehäuses 1 ein. Das Gehäuse 26 ist nach unten durch eine aus elastischem Material, vorzugsweise Metall oder Kunststoff, gefertigte Bodenplatte 30 verschlossen, die drei langgestreckte Öffnungen 31 aufweist, deren Längsachsen rechtwinklig zu der Längsachse der Lagerbolzen 29 der zugehörigen Stativbeine 9 nach außen verlaufen. Vorteilhafterweise sind diese Ausnehmungen 31 so ausgebildet, daß sie an ihren beiden Enden kreisbogenförmig sind und dem Durchmesser der Stativbeine 9 entsprechen. In dem dazwischen liegenden Bereich 31A sind die Ausnehmungen 31 um einen geringen Betrag, vorzugsweise einige Zehntel Millimeter, schmäler, so daß die Stativbeine in beiden Endlagen stabil sind. Um in besonders einfacher Weise den Übergang der Stativbeine von der einen in die andere Endlage zu ermöglichen, sind parallel zu den langgestreckten Ausnehmungen 31 in die Bodenplatte 30 im Abstand schmale Schlitze 32 eingebracht, die ein federndes Wegdrücken der Stecke 31A ermöglichen.

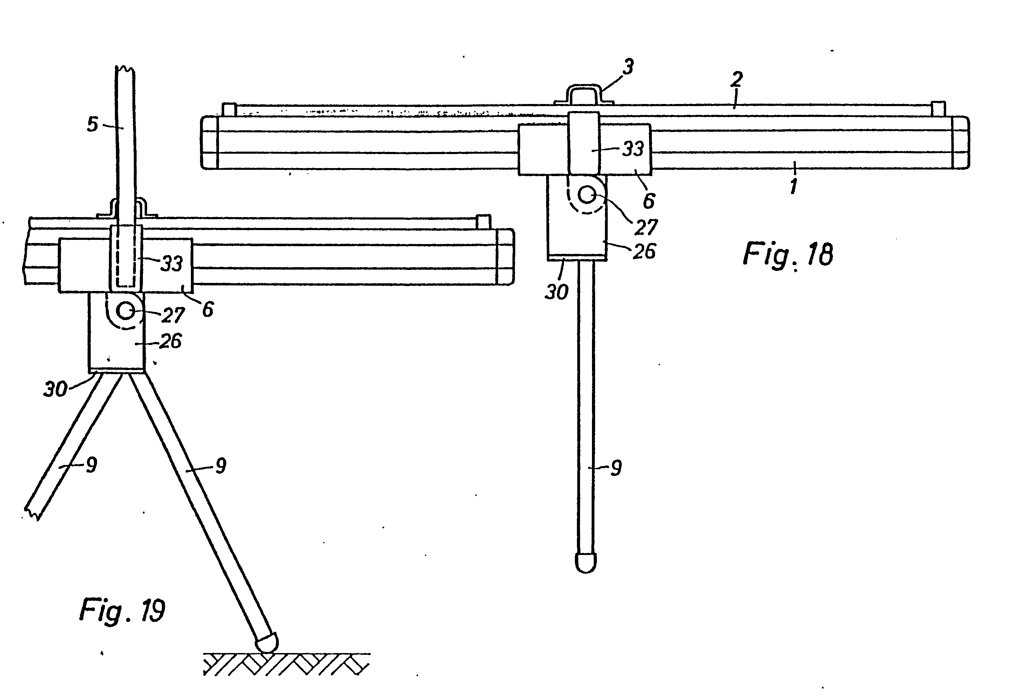

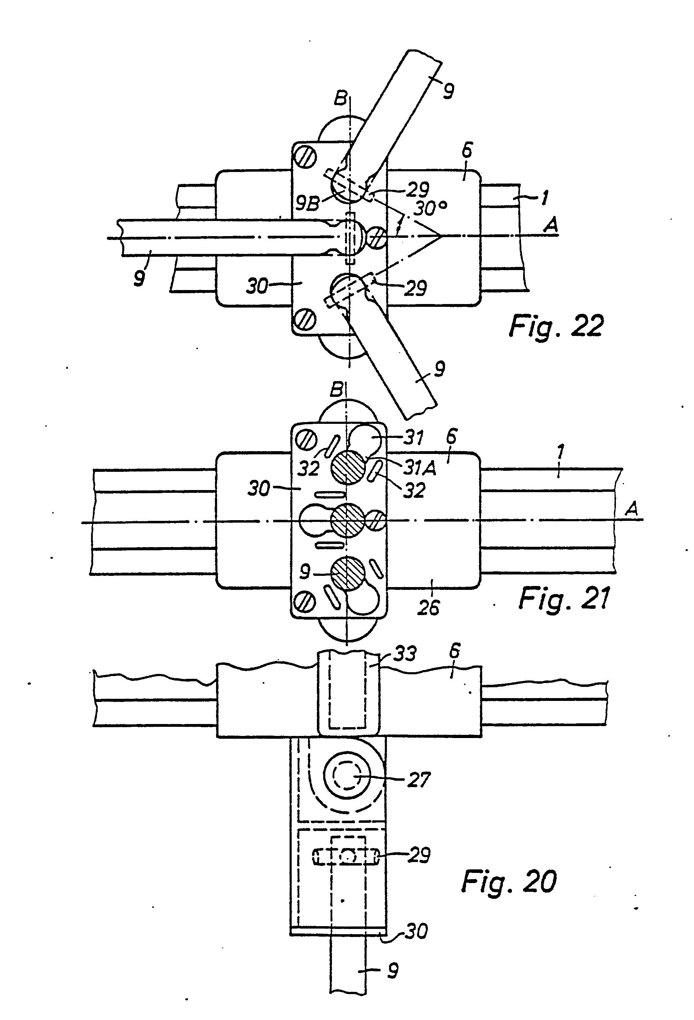

Das Aufstellen dieser Ausführungsform der erfindungsgemäßen Projektionsleinwand aus der in Fig.15 dargestellten Lage erfolgt in der Weise, daß zunächst der Fußteil 26 des Standkörpers 6 in Richtung des Pfeils in die in Fig. 18 dargestellte Lage nach unten geklappt wird. Danach werden die Stativbeine 9 aus der senkrecht zur Längsachse A des Gehäuses 1 verlaufenden Ebene, die durch die Fig. 21 dargestellte Querachse B verläuft, jeweils in ihre abgespreizte Lage nach außen geklappt, wodurch sie in die in Fig. 19 dargestellte Endlage gelangen. Das Zusammenklappen für den Transport geschieht in umgekehrter Reihenfolge.

Bei der dargestellten Ausführungsform ist an beiden Seiten des Gehäuses 1 am Standkörper 6 auf beiden Seiten je eine Hülse 33 vorgesehen, in die das Standrohr 5 einsetzbar ist, das beim Transport mittels einer Klammer auf dem Gehäuse 1 befestigbar ist oder lose auf diesem aufliegt.

**Patentansprüche**

1. Transportable Projektionsleinwand, die in einem Gehäuse ausrollbar gelagert ist, mit einem Standrohr zur Stützung der ausgezogenen Leinwand, mit ausklappbaren Stativbeinen, sowie mit einem Tragegriff, dadurch gekennzeichnet, daß am Gehäuse (1) ein Standkörper (6) starr befestigt ist, an dem die Stativbeine (9) schwenkbar angelenkt sind.

16. Transportable Projektionsleinwand, die in einem Gehäuse ausrollbar gelagert ist, mit einem Standrohr zur Stützung der ausgezogenen Leinwand, mit ausklappbaren Stativbeinen, sowie mit einem Tragegriff, dadurch gekennzeichnet, daß am Gehäuse (1) ein Standkörper (6) starr befestigt ist, der einen schwenkbaren Fußteil (26) aufweist, an dem die Stativbeine (9) schwenkbar angelenkt sind.

2. Projektionsleinwand nach Anspruch 1, dadurch gekennzeichnet, daß die Stativbeine (9) am oberen Ende kugelförmige Endteile (9B) aufweisen, die mit als Lagerschalen dienenden Ausnehmungen (10) im Standkörper (6) in Eingriff stehen.

3. Projektionsleinwand nach Anspruch 2, dadurch gekennzeichnet, daß die Lagerschalen (10) für ein Stativbein (9) unter der Mittelachse des Gehäuses (1) und nach einer Richtung außermittig versetzt angeordnet sind, und daß die Lagerschalen (10) für zwei weitere Stativbeine (9) in derselben Ebene mit Abstand von den ersten Lagerschalen (10) und in der anderen Richtung versetzt angeordnet sind.

4. Projektionsleinwand nach einem der vorhergehenden Ansprüche, dadurch gekennzeichnet, daß im Standkörper (6) eine verschiebbare, horizontal verlaufende Halteplatte (11) vorgesehen ist, die an senkrecht nach unten verlaufenden Haltern (15) Nasen (15A) aufweist, welche mit den Stativbeinen (9) in Eingriff bringbar sind.

5. Projektionsleinwand nach Anspruch 4, dadurch gekennzeichnet, daß die Halter (15) elastisch verformbar sind.

6. Projektionsleinwand nach Anspruch 9 oder 5, dadurch gekennzeichnet, daß die Halter (15) von den Nasen (15A) an am unteren Ende (15B) keilförmig ausgebildet sind.

7. Projektionsleinwand nach Anspruch 4, dadurch gekennzeichnet, daß die Betätigungsplatte (11) gegen die Kraft einer Feder (13) verschiebbar ist.

8. Projektionsleinwand nach einem der Ansprüche 4 bis 7, dadurch gekennzeichnet, daß die Betätigungsplatte (11) mindestens einen Lappen (IIA) aufweist, der einen Betätigungsknopf (12) trägt, welcher durch den Standkörper (6) hindurchgreift.

9. Projektionsleinwand nach einem der vorgehenden Ansprüche, dadurch gekennzeichnet, daß im Standkörper (6) Feststeller (16) für die abgespreizten Stativbeine (9) vorgesehen sind.

10.Projekttionsleinwand nach Anspruch 9, dadurch gekennzeichnet, daß die Feststeller (16) aus elastischem Material bestehen und Ausnehmungen (16A) aufweisen, die dem Außendurchmesser der Stativbeine (9) entsprechen.

11. Projektionsleinwand nach Anspruch 10, dadurch gekennzeichnet, daß die Feststeller (16) kreisrund ausgebildet sind und einen in Längsrichtung sich erstreckenden Schlitz (16B) aufweisen, dessen Öffnungswinkel kleiner als 180° ist.

12. Projektionsleinwand nach einem der vorhergehenden Ansprüche, dadurch gekennzeichnet, daß der Standkörper (6) mindestens auf einer Seite eine Ausnehmung (17) für die abnekmbare Befestigung des Standrohrs (5) aufweist.

13. Projektionsleinwand nach Anspruch 12, dadurch gekennzeichnet, daß die Ausnehmung 17) schlüssellochförmig ausgebildet ist, und daß am Standrohr (5) ein rechtwinklig zu diesem verlaufender und gegen dieses verschiebbarer Bolzen (18) mit Betätigungsknopf (19) vorgesehen ist, der einen nach einer Seite verlaufenden Stift (18A) aufweist.

14. Projektionsleinwand nach Anspruch 13, dadurch gekennzeichnet, daß um den Bolzen (18) eine auf einer Scheibe (21) sich abstützende Schraubenfeder (22) angeordnet ist.

15. Projektionsleinwand nach einem der Ansprüche 12 bis 14, dadurch gekennzeichnet, daß von der Ausnehmung (17) ausgehend je eine parallel zum Leinwandgehäuse (1) und rechtwinklig dazu verlaufende Kerbe (23) vorgesehen ist.

17. Projektionsleinwand nach Anspruch 16, dadurch gekennzeichnet, daß die Stativbeine (9) rohrförmig ausgebildet sind und am oberen Ende mittels Lagerbolzen (20) im Fußteil (26) des Standkörpers (6) befestigt sind.

18. Projektionsleinwand nach Anspruch 17, dadurch gekennzeichnet, daß die Stativbeine (9) in einer quer zur Mittelachse (A) des Gehäuses (1) verlaufenden Quer achse (B) angeordnet sind.

19. Projektionsleinwand nach Anspruch 18, dadurch gekennzeichnet, daß der Lagerbolzen (29) des mittleren Stativbeins (9) in Richtung der Querachse (B) und die Lagerbolzen (29) der beiden äußeren Stativbeine (9) in einem Winkel von 60° hierzu angeordnet sind.

20. Projektionsleinwand nach Anspruch 19, dadurch gekennzeichnet, daß der Fußteil (26) des Standkörpers (6) eine Bodenplatte (30) mit langgestreckten Öffnungen (31) aufweist, deren Längsachse rechtwinklig zu den Lagerbolzen (29) verläuft und durch die sich die Stativbeine (9) hindurcherstrecken.

21. Projektionsleinwand nach Anspruch 20, dadurch gekennzeichnet, daß die langgestreckten öffnungen (31) an ihren beiden Enden entsprechend dem Querschnitt der Stativbeine (9) kreisbogenförmig ausgebildet sind und der dazwischen liegende Teil (31A) eine Verengung aufweist.

22. Projektionsleinwand nach Anspruch 20, dadurch gekennzeichnet, daß die Bodenplatte (30) auf mindestens einer Seite der Ausnehmungen (31) einen Schlitz (32) aufweist.

**Claims**

1. A portable projection screen which is unrollably mounted in a housing, comprising a stand tube for supporting the screen in the extended condition, support legs which can be swung out, and a carrier handle, characterised in that rigidly fixed to the housing (1) is a stand body (6) to which the support legs (9) are pivotably connected.

2. A projection screen according to claim 1 characterised in that at their upper ends the support legs (9) have spherical end portions (9b) which are engaged with openings (10) in the body (6), that serve as mounting shells.

3. A projection screen according to claim 2 characterised in that the mounting shells (10) for a support leg (9) are disposed beneath the axial centre line of the housing (1) and set off-centre in one direction, and that the mounting shells (10) for two further support legs (9) are arranged in the same plane at a spacing from the first mounting shells (10) and displaced in the other direction.

4. A projection screen according to one of the preceding claims characterised in that provided in the stand body (6) is a displaceable, horizontally extending holding plate (11) which has projections (15A) on perpendicularly downwardly extending holders (15), which projections can be brought into engagement with the support legs (9).

5. A projection screen according to claim 4 characterised in that the holders (15) are elastically deformable.

6. A projection screen according to claim 4 or claim 5 characterised in that the holders (15) are of a wedge-like configuration, at the lower end (15B), from the projections (15A) on.

7. A projection screen according to claim 4 characterised in that the actuating plate (11) is displaceable against the force of a spring (13).

8. A projection screen according to one of claims 4 to 7 characterised in that the actuating plate (11) has at least one lug (11A) which carries an actuating knob (12) which extends through the stand body (6).

9. A projection screen according to one of the preceding claims characterised in that locking means (16) for the support legs (9) in the spread-open position are provided in the stand body (6).

10. A projection screen according to claim 9 characterised in that the locking means (16) comprise elastic material and have openings (16A) which correspond to the outside diameter of the support legs (9).

11. A projection screen according to claim 10 characterised in that the locking means (16) are of a round configuration and have a slot (16B) which extends in the longitudinal direction and the angle of opening of which is less than 180°.

12. A projection screen according to one of the preceding claims characterised in that the stand body (6) is provided at least on one side with an opening (17) for removably fixing the stand tube (5).

13. A projection screen according to claim 12 characterised in that the opening (17) is of a keyhole-like configuration and that provided on the stand tube (5) is a pin (18) with actuating knob (19), the pin (18) extending at a right angle to the stand tube (5) and being displaceable theretowards and having a peg (18A) extending towards one side.

14. A projection screen according to claim 13 characterised in that a coil spring (22) which bears against a washer (21) is arranged around the pin (18).

15. A projection screen according to one of claims 12 to 14 characterised by respective notches (23) which extend parallel to the screen housing (1) and at a right angle thereto, starting from the opening (17).

16. A portable projection screen which is unrollably mounted in a housing, comprising a stand tube for supporting the screen in the extended condition, support legs which can be swung out, and a carrier handle, characterised in that rigidly fixed to the housing (1) is a stand body (6) which has a pivotable base portion (26) to which the support legs (9) are pivotably connected.

17. A projection screen according to claim 16 characterised in that the support legs (9) are tubular and are fixed at their upper end by means of mounting pins (20) in the base portion (26) of the stand body (6).

18. A projection screen according to claim 17 characterised in that the support legs (9) are disposed on a transverse line (B) extending transversely with respect to the axial centre line (A) of the housing (1).

19. A projection screen according to claim 18 characterised in that the mounting pin (29) of the middle support leg (9) is disposed in the direction of the transverse line (B) and the mounting pins (29) of the two outer support legs (9) are arranged at an angle of 60° relative thereto.

20. A projection screen according to claim 19 characterised in that the base portion (26) of the stand body (6) has a bottom plate (30) having elongate openings (31), the longitudinal axes of which extend at right angles to the mounting pins (29) and through which the support legs (9) pass.

21. A projection screen according to claim 20 characterised in that the elongate openings (31) are of an arcuate configuration at their two ends, corresponding to the cross-section of the support legs (9), and the portion (31A) which is disposed therebetween has a constriction.

22. A projection screen according to claim 20 characterised in that the bottom plate (30) has a slot (32) on at least one side of the openings (31).

**Revendications**

1. Ecran de projection transportable logé dans un boîtier de manière à pouvoir être déroulé, équipé d'un tuyau vertical pour étayer l'écran déroulé, d'un trépied à branches dépliables ainsi que d'une poignée caractérisé en ce que un corps de support (6) est fixé de manière rigide au boîtier (1), auquel les branches du trépied (9) sont fixées par une articulation pivotante.

2. Ecran de projection selon revendication 1 caractérisè en ce que les branches de trépied (9) comportent à l'extrémitè supérieure des pièces terminales (9B) sphériques qui sont en prise avec des creux (10) dans le corps de support (6) servant de coquilles de support.

3. Ecran de projection selon revendication 2 caractérisé en ce que les coquilles de support (10) pour une branche de trépied (9) sont disposées au-dessous de l'axe central du boîtier (1) et, dans une direction, décalées par rapport au centre et que les coquilles de support (10) pour deux branches de trèpied (9) supplémentaires sont disposées dans le même plan à distance des premières coquilles de support (10) et décalées dans l'autre sens.

4. Ecran de projection selon l'une des revendications précédentes caractérisé en ce que dans le corps de support (6) est prévue une plaque de fixation (11) qui est disposée horizontalement et de manière mobile et qui comporte sur des fixations (15) orientées perpendiculairement vers le bas des saillies (15A) qui peuvent être mises en prise avec les branches du trépied (9).

5. Ecran de projection selon revendication 4 caractérisé en ce que les fixations (15) peuvent être déformées de manière élastique.

6. Ecran de projection selon revendication 4 ou 5 caractérisé en ce qu'à partir des saillies (15A) les fixations (15) ont une forme de cônes à l'extrémité inférieure (15B).

7. Ecran de projection selon revendication 4 caractérisé en ce que la plaque de manutention (11) peut être déplacée contre la force d'un ressort (13).

8. Ecran de projection selon l'une des revendications 4 à 7 caractérisé en ce que la plaque de manutention (11) comporte au moins une projection (11A) qui porte un bouton d'actionnement (12) qui traverse le corps de support (6).

9. Ecran de projection selon l'une des revendications précédentes caractérisé en ce qu'un dispositif d'arrêt (16) est prévu dans le corps de support (6) pour bloquer les branches de trépied (9) écartées.

10. Ecran de projection selon revendication 9 caractérisé en ce que les dispositifs d'arrêt (16) sont en matériau élastique et comportent des creux (16A) qui correspondent au diamètre extérieur des branches de trépied (9).

11. Ecran de projection selon revendication 10 caractérisé en ce que les dispositifs d'arrêt (16) sont circulaires et comportent une fente (165) disposée en sens longitudinal, dont l'angle d'ouverture est inférieur à 180°.

12. Ecran de projection selon l'une des revendications précédentes caractérisé en ce que le corps de support (6) comporte d'un côté au moins un creux (17) pour fixer de manière amovible le tuyau vertical (5).

13. Ecran de projection selon revendication 12 caractérisé en ce que le creux (17) a la forme d'une serrure et qu'est prévu sur le tuyau vertical (5) un axe (18) avec bouton d'actionnement (19) disposé à angle droit par rapport au tuyau vertical (5) et de manière à pouvoir être déplacé par rapport à ce dernier, bouton d'actionnement qui comporte une tige (18A) dirigée vers un côté.

14. Ecran de projection selon revendication 13 caractérisé en ce qu'un ressort cylindrique (22) est disposé autour de l'axe (18) et s'appuie contre un disque (21).

15. Ecran de projection selon l'une des revendications 12 à 14 caractérisé en ce qu'une rainure (23) est prévue partant du creux (17) parallèlement par rapport au boîtier de l'écran et à angle droit par rapport à celui-ci.

16. Ecran de projection transportable logé dans un boîtier de manière à pouvoir être déroulé, équipé d'un tuyau vertical pour étayer l'écran déroulé, d'un trépied à branches dépliables ainsi que d'une poignée caractérisée en ce qu'un corps de support (6) est fixé de manière rigide au boîtier (1), le corps de support comportant une pièce d'ancrage (26) basculable à laquelle sont fixées par une articulation pivotante les branches du trépied (9).

17. Ecran de projection selon revendication 16 caractérisé en ce que les branches de trépied (9) sont en forme de tuyau et sont fixées à l'extrémité supérieure au moyen d'axes (20) dans la pièce d'ancrage (26) du corps de support (6).

18. Ecran de projection selon revendication 17 caractérisé en ce que les branches de trépied (9) sont disposées sur un axe transversal (E) orienté transversalement par rapport à l'axe central (A) du boîtier (1).

19. Ecran de projection selon revendication 18 caractérisé en ce que l'axe (29) de la branche de trépied (9) centrale est disposé en direction de l'axe transversal (B) et que les axes (29) des deux branches de trépied (9) extérieures sont disposés dans un angle de 60° par rapport à l'axe.

20. Ecran de projection selon revendication 19 caractérisé en ce que la pièce d'ancrage (26) du corps de support (6) comporte une plaque de fond (30) avec des ouvertures (31) allongées dont l'axe longitudinal est disposé à angle droit par rapport aux axes (29) et à travers lesquelles traversent les branches de trépied (9).

21. Ecran de projection selon revendication 20 caractérisé en ce que les ouvertures allongées (31) ont en leurs deux extrémités une forme en arc de cercle correspondant au diamètre des branches de trépied (9) et que la partie intermédiaire (31A) comporte un rétrécissement.

22. Ecran de projection selon revendication 20 caractérisé en ce que la plaque de fond (30) comporte au moins d'un côté (31) une fente (32).

Fig.2

Fig.1

Fig.3

Fig.4

Fig.5

0 083 795

Fig. 6

Fig. 7

Fig. 8

0 083 795

Fig. 9

Fig. 11

Fig. 10

Fig. 12

Fig. 13

Fig. 14

Fig.15

Fig.16

Fig.17

0 083 795

Fig. 18

Fig. 19

0 083 795

13

Fig. 22

Fig. 21

Fig. 20